Europäisches Patentamt

European Patent Office

Office européen des brevets

(11) Veröffentlichungsnummer : **0 143 999**
**B1**

(12) **EUROPÄISCHE PATENTSCHRIFT**

(45) Veröffentlichungstag der Patentschrift :
29.07.87

(51) Int. Cl.⁴ : **F 16 D 1/08**

(21) Anmeldenummer : **84113171.7**

(22) Anmeldetag : **02.11.84**

(54) Spannanordnung.

(30) Priorität : 01.12.83 DE 3343446
21.09.84 DE 3434690

(43) Veröffentlichungstag der Anmeldung :
12.06.85 Patentblatt 85/24

(45) Bekanntmachung des Hinweises auf die Patenterteilung : 29.07.87 Patentblatt 87/31

(84) Benannte Vertragsstaaten :
**AT CH FR GB IT LI NL SE**

(56) Entgegenhaltungen :
**DE-A- 2 017 149**
**DE-A- 2 329 940**
**DE-A- 2 819 069**
**DE-B- 2 322 831**
**GB-A- 622 461**
**GB-A- 837 276**

(73) Patentinhaber : **Müllenberg, Ralph**
**Im Wiesengrund 6**
**D-4048 Grevenbroich 12 (DE)**

(72) Erfinder : **Müllenberg, Ralph**
**Im Wiesengrund 6**
**D-4048 Grevenbroich 12 (DE)**

(74) Vertreter : **Patentanwälte Dipl.-Ing. Walter Kuborn**
**Dipl.-Phys. Dr. Peter Palgen**
**Mulvanystrasse 2**
**D-4000 Düsseldorf (DE)**

## Beschreibung

Die Erfindung bezieht sich auf eine Spannanordnung der dem Oberbegriff des Anspruchs 1 entsprechenden Art.

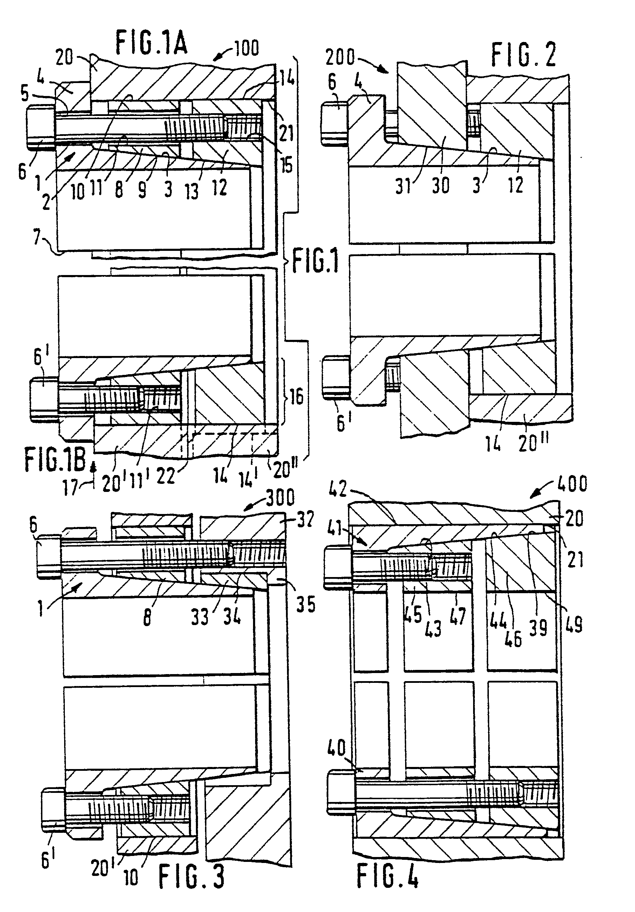

Eine derartige Spannanordnung ist in Gestalt eines sogenannten Spannsatzes aus der DE-A-20 17 149, Fig. 1 bekannt. Der relativ dünnwandige Flanschkonusring sitzt mit seiner zylindrischen Innenumfangsfläche auf einer das innere Bauteil bildenden Welle. Das Konusteil ist als Konusring ausgebildet, der mit seiner konischen Innenumfangsfläche mit der Außenumfangsfläche des Flanschkonusringes zusammenwirkt und eine zylindrische Außenumfangsfläche aufweist, die in einer Nabe angeordnet ist.

Es zeigt sich in der Praxis, daß die Spannungsverteilung längs der Welle, d. h. die spezifische Flächenpressung, mit welcher der Flanschkonusring gegen die Welle gepreßt wird, nicht gleichmäßig ist, wie es theoretisch sein sollte, sondern zum dünnwandigen Ende des Flanschkonusringes ein starker Spannungsanstieg stattfindet. Dies gilt besonders, wenn der Konusring im verspannten Zustand axial noch etwas über das dünnwandige Ende des Flanschkonusrings übersteht. Diese hohen Randspannungen überlagern sich dem in der Welle durch das Drehmoment und gegebenenfalls auch noch durch Biegespannungen vorhandenen Spannungszustand, so daß es im Bereich des Endes des Flanschkonusrings zu überhöhten Vergleichsspannungen kommen kann, die zu plastischen Verformungen führen und im Falle einer Umlaufbiegebeanspruchung auch eine Wechselbeanspruchung bilden können, die im Extremfall Ursache für Risse in der Welle sein kann.

Der Erfindung liegt die Aufgabe zugrunde, eine Spannanordnung der dem Oberbegriff des Anspruchs 1 entsprechenden Art so auszugestalten, daß die Spannungsverteilung längs der Achse bis zu einem gewissen Grade beeinflußt und insbesondere die Spannungsüberhöhung am Ende des Flanschkonusrings vermieden werden können.

Diese Aufgabe wird erfindungsgemäß durch die im Kennzeichen des Anspruchs 1 wiedergegebenen Merkmale gelöst.

Der Grundgedanke hierbei ist, von der bei nur einem, sich im wesentlichen über die axiale Länge des Flanschkonusrings erstreckenden Konusteil sich einstellenden Überhöhung der Spannung am Rande beim Anziehen bis auf einen bestimmten Verspannungsgrad wegzukommen, indem das Konusteil in mehrere separat betätigbare Konusteile unterteilt wird, von denen die flanschnahen Konusteile so weit angezogen werden können, wie es zur Sicherstellung eines vorgegebenen übertragbaren Drehmoments notwendig ist, während das in Höhe des freien Endes des Flanschkonusrings angeordnete Konusteil davon unabhängig nur so weit angezogen wird, wie es für Erreichung noch zuträglicher Flächenpressungen notwendig ist. Auf diese Weise kann die Verspannung des oder der im Flansch benachbarten Konusteile so hoch vorgenommen werden, wie es zur Übertragung eines gewünschten Drehmoments erforderlich ist, ohne dafür unzuträglich hohe Randspannungen in Kauf nehmen zu müssen.

Aus der DE-A 23 29 940 ist zwar ebenfalls eine Konusspannanordnung bekannt, bei welcher mit einem ersten Konusring zwei weitere Konusringe zusammenwirken, die unabhängig voneinander verspannbar sind. Der erste Konusring ist hierbei aber ein Doppelkonusring, und es sind die weiteren Konusringe auf verschiedenen Konusflächen des Doppelkonusrings angeordnet.

Bei Konusspannanordnungen der hier in Rede stehenden Art sind zwei grundsätzliche Ausführungsformen bekannt. Die äußere Bauteilanordnung kann selbst eine Konusfläche aufweisen, die mit der äußeren Konusfläche des Flanschkonusrings zusammenwirkt. Es fällt also eine Ausführungsform unter die Erfindung, bei welcher auf der äußeren Konusfläche des Flanschkonusrings zwei Bauteile sitzen, die eine unmittelbar auf der Konusfläche des Flanschkonusrings aufliegende Innenkonusfläche aufweisen. Das « Konusteil » und das « äußere Bauteil » sind hierbei also eins.

Da aber in der Praxis überwiegend die Teile der eigentlichen Spannanordnung bei einem anderen Hersteller gefertigt werden als dem Hersteller der zu verspannenden Bauteile und dieser die Teile der Spannanordnung als fertiges Bauteil einzukaufen pflegt und da es ferner nur mit erheblichem Aufwand möglich ist, bei getrennter Herstellung die Konusflächen mit der erforderlichen Genauigkeit in Neigungswinkel und Oberflächenbeschaffenheit aufeinander abzustimmen, werden Spannanordnungen der in Rede stehenden Art häufig als sogenannte Spannsätze ausgebildet, die mit dem Flanschkonusring zusammenwirkende eigene Konusringe mit einer zylindrischen Umfangsfläche umfassen. Das äußere Bauteil wirkt hierbei also nicht mehr unmittelbar mit der Konusfläche des Flanschkonusrings zusammen, sondern weist lediglich eine zylindrische Bohrung auf, in die der « Spannsatz » eingesetzt wird. Eine zylindrische Bohrung bereitet hinsichtlich der Anpassung keine Schwierigkeiten.

Diese Ausführungsform ist auch bei der Erfindung gemäß Anspruch 2 zu bevorzugen.

Der Ausdruck « Bauteilanordnung » umfaßt sowohl den Fall, daß es sich um ein einstückiges Bauteil mit einer zylindrischen Ausnehmung handelt, mit welcher zwei auf einem Flanschkonusring angeordnete Konusringe zusammenwirken, als auch den Fall, daß es sich z. B. um zwei in Achsrichtung hintereinander angeordnete getrennte Bauteile handelt, von denen mindestens eines auf einem Konusring angeordnet ist (Anspruch 3).

Bei dieser Ausführungsform der erfindungsgemäßen Spannanordnung ergibt sich ein wichtiger Zusatzvorteil, der in vielen Fällen von wesentlicher Bedeutung sein kann. Wenn beispielsweise bei der Ausführungsform nach der DE-A 20 17 149, Fig. 1, gleiche Gleitpaarungen auf der Welle und in der Nabenbohrung vorausgesetzt (ganz überwiegend Stahl), das übertragene Drehmoment ansteigt, wird ein Durchrutschen stets zuerst auf der Welle stattfinden, weil dort eben der Radius kleiner und dementsprechend für ein bestimmtes Drehmoment die Umfangskräfte, die durch Reibung gehalten werden müssen, größer sind. Ein Durchrutschen auf der Welle indessen ist in vielen Fällen äußerst unerwünscht, weil die Welle dabei durch Riefen beschädigt und die Demontage der Spannanordnung erschwert werden.

Die oben genannte Ausführungsform bietet nun die Möglichkeit der Schaffung einer Überlastsicherung, ohne daß es zu einem Durchrutschen auf der Welle kommt. Vielmehr rutscht das auf dem Konusring sitzende äußere Bauteil auf dessen Zylinderfläche durch. Dies wird dadurch erreicht, daß der Flanschkonusring auf der Welle nicht nur ausschließlich durch die an dem betreffenden Bauteil wirkenden radialen Kräfte festgehalten ist, sondern zusätzlich auch noch die zwischen dem Flanschkonusring und dem benachbarten Bauteil wirkenden radialen Kräfte. Der Flanschkonusring wird also gewissermaßen auf der Welle künstlich zusätzlich festgehalten, so daß er unter der Wirkung des an dem einen Bauteil ausgeübten Drehmoments nicht durchrutscht, sondern daß das Durchrutschen zuerst an der Zylinderfläche des dem betreffenden Bauteil zugeordneten Konusrings stattfindet, d. h. also außerhalb der Welle.

Konstruktionen mit nebeneinander auf einer Welle angeordneten Bauteilen sind ziemlich häufig, z. B. bei nebeneinander angeordneten Zahnrädern, Kettenzahnrädern und Kurbeltrieben mit der Kurbel benachbartem Antriebsrad.

Das Anziehen der Spannanordnung geschieht mittels über den Umfang verteilter, den Flansch des Flanschkonusrings durchgreifender axialer Spannschrauben. Es müssen dementsprechend beim Anziehen von zwei auf dem gleichen Flanschkonusring sitzenden Konusteilen bzw. Konusringen zwei Sätze derartiger Spannschrauben vorhanden sein. Da die Zahl der auf dem Umfang des Flansches unterbringbaren Spannschrauben beschränkt ist, beschränkt sich auch die Zahl der an jedem einzelnen Konusteil bzw. Konusring angreifenden Spannschrauben auf etwa die Hälfte der Maximalzahl. Dadurch sind auch die maximale axiale Zugkraft und dementsprechend die radiale Klemmkraft und das übertragbare Drehmoment beschränkt.

Anspruch 4 gibt eine Ausgestaltung der Erfindung wieder, mittels deren jedem einzelnen Konusteil bzw. Konusring eine größere Anzahl von Spannschrauben zugute kommt.

Das dem Flansch benachbarte Konusteil wird zunächst mittels der Spannschrauben größeren Durchmessers, die über den Umfang ohne wesentliche Zwischenräume (bis auf eventuelle Abdrückgewinde) verteilt sind, bis zu der gewünschten Verspannung angezogen. Diese Spannschrauben werden sodann entfernt, wobei die Verspannung wegen der Selbsthemmung des Konuswinkels aufrechterhalten bleibt. Es werden sodann der Hilfsring vor den Flansch gesetzt und die Spannschrauben mit dem geringeren Durchmesser durch die Durchgangsbohrungen des Flansches und die Gewindebohrungen des flanschnahen Konusteils hindurch in die fluchtenden Gewindebohrungen des nächsten Konusteils eingeschraubt und angezogen. Auf diese Weise kann jeder Konusring mit einem den Umfang des Flanschkonusrings ausfüllenden vollen Satz von Spannschrauben angezogen werden.

Um den geringeren Durchmesser des zweiten Spannschraubensatzes auszugleichen, können der flanschferne Teil des Flanschkonusrings und der damit zusammenwirkende Konusteil einen verringerten Konusneigewinkel aufweisen. Es ist dann die bei einer bestimmten Axialkraft erzielbare Radialkraft entsprechend höher.

Die Ausgestaltung nach Anspruch 6 hat eine besondere Bedeutung in Fällen, in denen wegen der begrenzten Festigkeit eines Bauteils die Erzielung ausreichend hoher Klemmkräfte Schwierigkeiten bereitet. Dies ist zum Beispiel der Fall, wenn Naben aus Grauguß oder Aluminium bestehen. Hierbei kann dank der Erfindung das betreffende Bauteil durch entsprechendes Anziehen der zugehörigen Konusanordnung bis zu einer noch zulässigen Radialspannung belastet und an der benachbarten Konusanordnung ein erheblicher zusätzlicher Reibungsschluß erzeugt werden, der über die Drehverbindung ebenfalls dem ersten Bauteil zugute kommt.

In der Zeichnung sind Ausführungsbeispiele der erfindungsgemäßen Spannanordnung schematisch dargestellt.

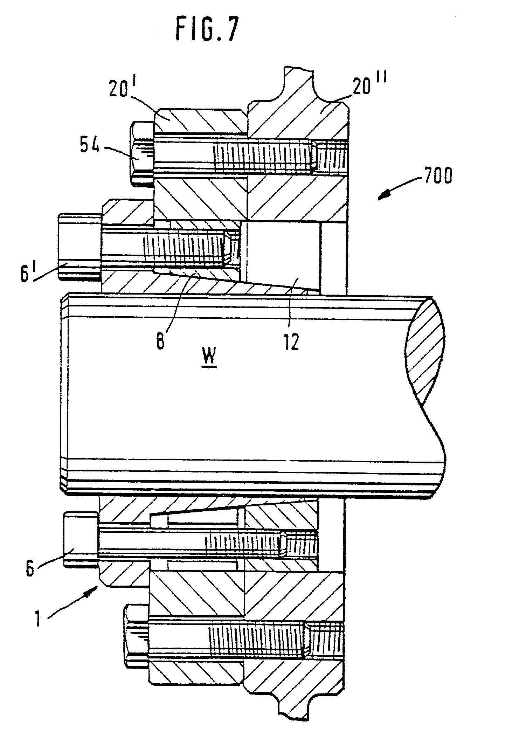

Fig. 1 bis 7 zeigen Längsschnitte durch die Spannanordnungen, wobei die das innere Bauteil bildende Welle in den Fig. 1 bis 6 weggelassen, in Fig. 7 mitgezeichnet ist und die äußeren Bauteile nur angedeutet sind.

Bei der in Fig. 1 dargestellten, als Ganzes mit 100 bezeichneten Spannanordnung ist ein Flanschkonusring 1 vorhanden, der mit seiner zylindrischen Innenumfangsfläche 2 auf einer nicht dargestellten Welle anliegt. Auf der gegenüberliegenden Seite besitzt der Flanschkonusring 1 eine äußere Konusfläche 3, deren Scheitel gemäß Fig. 1 rechts liegt, so daß das dickwandigere Ende des Flanschkonusrings 1 links auf der Seite des zur Seite der Konusfläche 3, d. h. nach außen vorstehenden Radialflansches 4 gelegen ist. Der Radialflansch 4 weist über den Umfang verteilte Durchgangsbohrungen 5 auf, die von Spannschrauben 6, 6' und gegebenenfalls von nicht dargestellten Abdrückschrauben durchgriffen werden. Der Flanschkonusring 1 ist an einer Stelle mit einem Längsschlitz 7 versehen, damit er in radialer Richtung leicht verformbar ist und nicht Spannkraft der Schrauben 6, 6' für die bloße Verformung des Flanschkonusrings 1 verlorengeht.

Auf dem Flanschkonusring 1 ist, dem Flansch 4 benachbart, ein erster Konusring 8 mit einer inneren, mit der Konusfläche 3 zusammenwirkenden Konusfläche 9 und einer darüber angeordneten äußeren zylindrischen Umfangsfläche 10 angeordnet, der an über den Umfang verteilten Stellen Durchgangsbohrungen 11 für die Spannschrauben 6 und Gewindebohrungen 11' für die Spannschrauben 6' aufweist. Die Spannschrauben 6' ziehen den Konusring 8 gemäß Fig. 1 nach links, wobei die Konusflächen 9, 3 aufeinander abgleiten und der Konusring 8 radial aufgeweitet wird. Um diese Verformung zu erleichtern, weist auch der Konusring 8 einen nicht dargestellten Längsschlitz auf.

In Achsrichtung neben dem Konusring 8 ist auf dem Flanschkonusring 1 ein zweiter geschlitzter Konusring 12 mit einer inneren Konusfläche 13 und einer zylindrischen Außenumfangsfläche 14 angeordnet, welcher Gewindebohrungen 15 für die Spannschrauben 6 aufweist. Diese durchgreifen den Konusring 8 und greifen in den Konusring 12 ein, um diesen mit einer unabhängig von den Spannschrauben 6' einstellbaren Kraft gemäß Fig. 1 nach links zu ziehen.

Die beiden zylindrischen Außenumfangsflächen 10, 14 der Konusring 8, 12 liegen in der zylindrischen, mit gleichem Durchmesser durchgehenden Innenumfangsfläche der Ausnehmung 21 eines äußeren Bauteils 20 an, welches in dem in Fig. 1 oben dargestellten Beispiel ein einstückiges Bauteil ist. Beim Anziehen der Spannschrauben 6, 6' wird die nicht dargestellte Welle in der Ausnehmung 21 durch Reibschluß drehfest fixiert.

Der flanschnahe Konusring 8 kann mittels der Spannschrauben 6' mit beliebiger Kraft angezogen werden. Die Anzugskraft des Konusrings 12 kann unabhängig davon mittels der Spannschrauben 6 so dosiert werden, daß die sonst am in Fig. 1 rechten Ende des Flanschkonusrings 1 leicht eintretende unzuträgliche Spannungsspitze vermieden wird.

In der unteren Hälfte der Fig. 1 ist angedeutet, daß die Durchmesser der Zylinderflächen 10, 14 auch verschieden sein können, wie durch die gestrichelte Linie 14' angedeutet, so daß die Ausnehmung 21 eine Stufenbohrung ist. Insbesondere aber kann die äußere Bauteilanordnung, die in der oberen Hälfte der Fig. 1 durch das einstückige Bauteil 20 gegeben war, auch aus zwei in Achsrichtung nebeneinanderliegenden Bauteilen 20', 20'' bestehen, die längs einer Radialebene 22 zusammenstoßen oder aber auch einen axialen Abstand voneinander aufweisen, wie gestrichelt angedeutet. Jedem Bauteil 20', 20'' ist ein Konusring 8 bzw. 12 zugeordnet. Die beiden Bauteile 20', 20'' sitzen aber auf einem gemeinsamen Flanschkonusring 1.

Diese Konfiguration ermöglicht die Schaffung einer Überlastsicherung, bei der beim Vorliegen einer Überlast ein Durchrutschen stattfindet, jedoch nicht auf der Welle. Wenn auf eines der Bauteile 20', 20'' ein Drehmoment wirkt, welches bei einem gegebenen Verspannungszustand durch Reibschluß nicht mehr übertragen werden kann, beispielsweise bei dem Bauteil 20'', so rutscht dieses an der zylindrischen Umfangsfläche 14 und nicht etwa auf der Welle durch, weil der Flanschkonusring 1 außer durch die durch den Konusring 12 hindurch übertragenen Radialkräfte zusätzlich auch noch durch die durch den Konusring 8 hindurch übertragenen Radialkräfte auf der Welle festgeklemmt wird und seine Durchrutschgrenze daher entsprechend erhöht ist.

Soweit in den folgenden Ausführungsformen gleiche Teile vorliegen, sind gleiche Bezugszahlen verwendet.

Der Hauptunterschied der Spannanordnung 200 der Fig. 2 gegenüber der Spannanordnung 100 der Fig. 1 besteht darin, daß an dem flanschnahen Bauteil 30 die Konusfläche 31 unmittelbar angebracht ist, daß also kein separater Konusring vorhanden ist, der in einer zylindrischen Ausnehmung des Bauteils 30 angeordnet wäre. Das führt dazu, daß sich die Bauteilanordnung nicht mehr von den Spannteilen trennen läßt und daß die Spannanordnung 200 nicht mehr einen separaten, eine in sich geschlossene Einheit bildenden Spannsatz 16 umfaßt wie in Fig. 1. Im übrigen weist auch die Spannanordnung 200 zwei in Achsrichtung nebeneinander angeordnete voneinander getrennte Bauteile 20'', 30 auf, bei denen für das Bauteil 20'' in gleicher Weise unter Durchrutschen an der zylindrischen Umfangsfläche 14 des Konusrings 12 eine Überlastsicherung gegeben ist wie in Fig. 1.

Ein weiterer Unterschied der Spannanordnung 200 besteht darin, daß das Bauteil 30 nicht an dem Flansch 4 anliegt, wie es an der Stelle 17 bei dem Bauteil 20' der Fall ist. Das wiederum hat zur Folge, daß sich bei einem Anziehen der Spannschrauben 6, 6' die Bauteile 30 und 20'' gegenüber der nicht dargelegten Welle um eine geringe Strecke nach links verlagern. In manchen Fällen spielt dies keine Rolle. Der Vorteil ist, daß ein Gleiten nur entlang der Konusfläche 3 stattfindet und nur hier die Reibung überwunden werden muß. Bei der Ausführungsform nach Fig. 1 findet beim Anziehen der Schrauben 6, 6' ein Gleiten sowohl auf der Konusfläche 3 als auch in der Ausnehmung 21 des äußeren Bauteils 20 statt. Durch die Anlage an der Stelle 17 bleibt das äußere Bauteil 20 zwar exakt an seiner Stelle stehen, doch geht ein größerer Anteil der Schraubenspannkraft für die Überwindung von Reibung verloren.

Bei der Spannanordnung 300 der Fig. 3 sitzt auf dem Konusring 8 wieder das Bauteil 20'. Die Spannschrauben 6 greifen unmittelbar in das Bauteil 32 ein, so daß dieses schon hierdurch an einem Durchdrehen gehindert ist. Es klemmt jedoch den Flanschkonusring 1 zusätzlich auf der nicht dargestellten Welle fest, so daß ein Durchrutschen nur an der Zylinderfläche 10 stattfinden kann. Die innere Konusfläche des Bauteils 32 ist durch einen relativ dünnwandigen konischen geschlitzten Einsatz 33 gebildet, der in eine zylindrische Bohrung 34 des Bauteils 32 eingesetzt und durch einen Bund 35 gegen ein Verrutschen unter der Wirkung der Spannschrauben 6 gesichert ist.

Während der Konusring 1 in den Fig. 1 bis 3 mit seiner zylindrischen Innenumfangsfläche 2 auf der nicht dargestellten Welle sitzt, besitzt der Konusring 41 eine zylindrische Außenumfangsfläche 42, die an der Ausnehmung 21 des äußeren Bauteils 20 anliegt. Die Konusfläche 39 des Flanschkonusrings ist Innenkonusfläche und wirkt mit den äußeren Konusflächen 43, 44 der Konusringe 45, 46 zusammen, die mit ihrer zylindrischen Innenumfangsfläche 47, 49 auf der nicht dargestellten Welle aufsitzen. Der Radialflansch 40 weist nach innen.

Die Spannanordnung 400 kommt nur für einstückige äußere Bauteile 20 in Betracht und kann nur dazu dienen, in der bei Fig. 1 geschilderten Weise die Spannungsüberhöhung am in Fig. 4 rechten Rand des Flanschkonusrings 41 zu verringern, nicht jedoch als Überlastsicherung. Da aber das Problem der Randspannungsüberhöhung nabenseitig, d. h. wenn der relativ dünnwandige Flanschkonusring nicht unmittelbar auf der Welle sitzt, ohnehin nicht so groß ist, ist die Spannanordnung 400 nicht als eine wichtige Ausführungsform anzusehen, obwohl sie den Gedanken der Erfindung verwirklicht.

Zum Lösen der vorstehend beschriebenen Spannanordnungen werden in die Gewindebohrungen 11' der kurzen Spannschrauben 6' längere Abdrückschrauben eingeschraubt, die gegen gewindefreie Stellen der rechten Konusringe drücken. Auf diese Weise kann der rechte Konusring abgedrückt werden. Zum Abdrücken der linken Konusringe sind in dem Flansch 4, 40 nicht dargestellte Abdrückgewinde vorgesehen, in die Abdrückschrauben einschraubbar sind, die gegen gewindefreie Stellen der linken Konusringe drücken und diese von dem Flanschkonusring abdrücken.

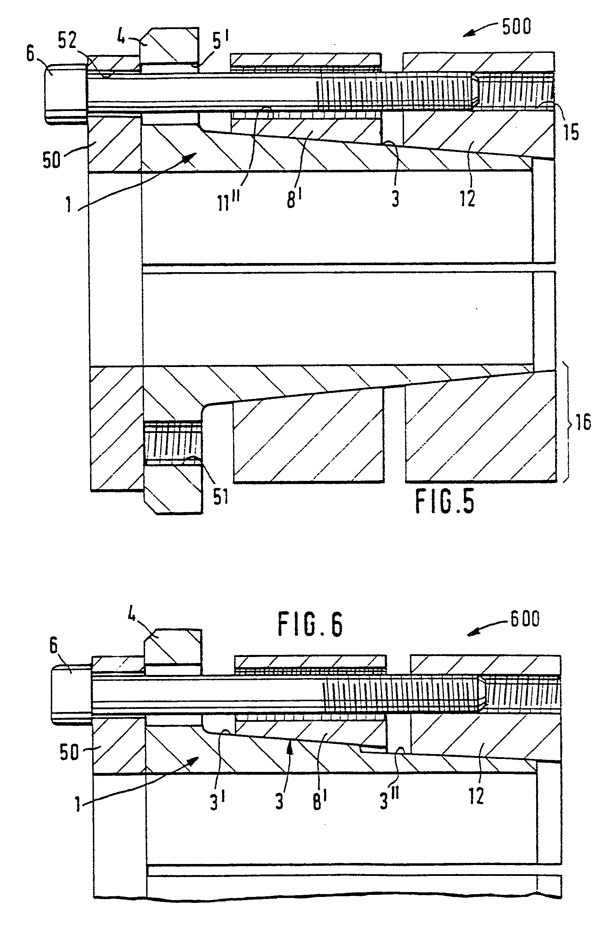

Die Spannanordnung 500 der Fig. 5 entspricht im wesentlichen der Spannanordnung 100 der Fig. 1. Der Hauptunterschied besteht jedoch darin, daß Spannschrauben zweier verschiedener Durchmesser verwendet werden. Der Konusring 8' weist Gewindebohrungen 11" auf, die einen solchen Durchmesser besitzen, daß die verwendeten Gewindeschrauben geringeren Durchmessers hindurchgesteckt werden können und sie also dafür als Durchgangsbohrungen dienen können. Auch die Durchgangsbohrung 5' in dem Flansch 4 des Flanschkonusrings 1 ist auf den größeren Durchmesser abgestellt. Die Gewindebohrungen 15 in dem Konusring 12 entsprechen dem geringeren Schraubendurchmesser. Beispielsweise kann der größere Schraubendurchmesser 14 mm, der geringere 10 mm betragen.

Beim Verspannen der Spannanordnung 500, die wieder einen eine separate Einheit bildenden Spannsatz 16 darstellt, wird zunächst der in Fig. 5 erkennbare, gegen die äußere Stirnseite des Flansches 4 anliegende Hilfsring 50 weggelassen Der Konusring 8' wird mittels der Spannschrauben größeren Durchmessers gemäß Fig. 5 nach links auf den Flanschkonusring 1 bis zu einem gewünschten Verspannungsgrad aufgezogen. Wenn die Spannschrauben grösseren Durchmessers jetzt gelockert werden, bleibt der Konusring 8' unter Spannung stehen, weil der Neigungswinkel der Konusfläche 3 sich im Selbsthemmungsbereich befindet. Nunmehr wird der Hilfsring 50 vor den Flansch 4 gesetzt, und es werden durch die Durchgangsbohrungen 52 und 5' und die Gewindebohrung 11" des Konusrings 8' hindurch die längeren Spannschrauben 6 in die Gewindebohrungen 15 des in Fig. 5 rechten Konusrings 12 eingeschraubt und dieser seinerseits verspannt. Der Vorteil dieser Anordnung besteht darin, daß der Teilkreis für die Spannschrauben für beide Konusringe 8' und 12 voll genutzt werden kann, während bei den Ausführungsformen der Fig. 1 bis 4 die Spannschrauben 6' zwischen die Spannschrauben 6 gesetzt werden mußten und für jeden Konusring somit nur die Hälfte der Spannschrauben zur Verfügung stand. Natürlich muß in beiden Fällen Platz für einige Abdrückgewinde 51 gelassen werden.

Die Spannanordnung 600 der Fig. 6 entspricht im wesentlichen der Spannanordnung 500 mit dem einzigen Unterschied, daß die Konusfläche 3 des Flanschkonusrings 1 in zwei in Achsrichtung aufeinanderfolgende Abschnitte 3' und 3" unterteilt ist, deren Neigungswinkel beide im Selbsthemmungsbereich liegen, wobei allerdings der Neigungswinkel des unter dem rechten, also flanschfernen Konusring 12 gelegenen Abschnitts 3" etwas kleiner ist als der des Abschnitts 3'. Natürlich sind die Neigungswinkel der Konusflächen der Konusringe 8' und 12 entsprechend angepaßt. Durch den geringeren Neigungswinkel des Abschnitts 3" lassen sich trotz des beim Anziehen des Konusrings 12 verwendeten geringeren Schraubendurchmessers dennoch erhöhte radiale Preßkräfte erzielen.

Im Hinblick auf die Ausbildung der in den Fig. 5 und 6 nicht dargestellten äußeren Bauteileanordnung gilt das gleiche wie in Fig. 1. Wenn es sich um ein einstückiges Bauteil handelt, an dem beide Konusringe angreifen, ist der Aspekt der Beeinflussung der Spannungsverteilung bzw. der Erniedrigung der Randspannung maßgeblich. Handelt es sich um zwei nebeneinander angeordnete Bauteile, so steht die Überlastsicherung im Vordergrund. Ist nur ein Bauteil auf einem der Konusringe vorhanden und liegt der andere, dann ungeschlitzte Konusring außerhalb des Bauteils, so geht es nur um die Überlastsicherung und dient der andere Konusring nur zum zusätzlichen Festklemmen des Flanschkonusrings auf der Welle.

In Fig. 7 ist eine Spannanordnung 700 wiedergegeben, die dazu dient, ein Bauteil 20", zum Beispiel eine Seilscheibe, ein Zahnrad oder dergleichen, zur Übertragung hoher Drehmomente auf der Welle W festzustezen. Das Bauteil 20" besteht aus einem gegen die auftretenden radialen Spannungen nicht allzu widerstandsfähigen Material, zum Beispiel aus Grauguß oder Aluminium. Die Spannanordnung 700 entspricht im wesentlichen der in Fig. 1 unten dargestellten Ausführung mit dem Unterschied, daß die beiden Bauteile 20', 20" durch axiale Schrauben 54 miteinander drehverbunden sind. Es wird das Bauteil 20" mittels des geschlitzten Konusrings 12 und der Spannschrauben 6 auf dem Konusring 1 verspannt, wie es angesichts des Materials des Bauteils 20" noch zulässig ist. Das axial benachbarte Bauteil 20' besteht aus einem ungeschlitzten Stahlring, der erhebliche radiale Kräfte aufzubringen vermag. Durch Anziehen des Konusrings 8 mittels der Schrauben 6' können also erhebliche Verspannungen erzielt werden. Das Drehmoment, welches die Ringe 8, 20' zu halten vermögen, kommt ebenfalls dem Bauteil 20" zugute, weil dieses durch die Schrauben 54 mit dem Bauteil 20' drehverbunden ist.

**Patentansprüche**

1. Spannanordnung zur Befestigung einer eine Ausnehmung (21, 34) aufweisenden äußeren Bauteilanordnung (20, 20', 20"), insbesondere einer Nabe, auf einem eine kreiszylindrische Außenumfangsfläche aufweisenden inneren Bauteil, insbesondere einer Welle, mit einem Flanschkonusring (1, 41) mit einer zylindrischen Umfangsfläche (2, 42), mit einer dieser radial gegenüberliegenden Konusfläche (3, 39) und mit einem an einem Ende vorgesehenen, zur Seite der Konusfläche (3, 39) vorspringenden radialen Flansch (4, 40), mit einem Konusteil (8 oder 12 ; 30 oder 12 ; 8 oder 33 ; 45 oder 46) mit einer konischen, zum Zusammenwirken mit der Konusfläche (3, 39) des Flanschkonusrings (1, 41) bestimmten Konusfläche (9 oder 13 ; 31 ; 43 oder 44) und mit axialen Spann- (6, 61) und ggf. Abdrückschrauben, die den Flansch (4, 40) durchgreifen und an dem Konusteil (8 oder 12 ; 30 oder 12 ; 8 oder 33 ; 45 oder 46) angreifen, dadurch gekennzeichnet, daß auf dem Flanschkonusring (1, 41) in Achsrichtung neben dem ersten Konusteil (8, 8', 30, 45) mindestens ein weiteres Konusteil (12, 33, 46) mit einer zum Zusammenwirken mit der gleichen Konusfläche (3, 3", 39) des Flanschkonusrings (1, 41) bestimmten Konusfläche (13, 44) vorgesehen ist, welches getrennt von dem ersten Konusteil durch axiale, den Flansch (4) durchgreifende Spann- und ggf. Abdrückschrauben (6, 6') mit dem Flanschkonusring (1, 41) verspannbar bzw. von diesem abdrückbar ist.

2. Spannanordnung nach Anspruch 1, dadurch gekennzeichnet, daß die Ausnehmung (21) der äußeren Bauteilanordnung mindestens teilweise kreiszylindrisch und mindestens eines der Konusteile ein mit einer entsprechenden kreiszylindrischen Umfangsfläche (10, 14) versehener Konusring (8, 12 ; 8') ist.

3. Spannanordnung nach Anspruch 1, dadurch gekennzeichnet, daß die äußere Bauteilanordnung zwei getrennte, in Achsrichtung hintereinander angeordnete Bauteile (20', 20" ; 30, 20") umfaßt, von denen mindestens eines auf einem Konusring (8, 12) angeordnet ist.

4. Spannanordnung nach einem der Ansprüche 1 bis 3, dadurch gekennzeichnet, daß die Konusfläche (3) des Flanschkonusrings (1) eine im Selbsthemmungsbereich liegende Neigung aufweist und an über den Umfang verteilten Stellen im Flansch (4) Durchgangsbohrungen (5') und in dem dem Flansch (4) benachbarten Konusteil (8') Gewindebohrungen (11") für Spannschrauben eines ersten Durchmessers und an mit den Gewindebohrungen (11") fluchtenden Stellen in dem zweiten Konusteil (12) Gewindebohrungen (15) für Spannschrauben eines zweiten, geringeren Durchmessers angebracht und ein Hilfsring (50) vorgesehen ist, der an den den Durchgangsbohrungen (5') des Flansches (4) entsprechenden Stellen Durchgangsbohrungen (52) für Spannschrauben (6) des zweiten Durchmessers aufweist.

5. Spannanordnung nach Anspruch 4, dadurch gekennzeichnet, daß der flanschferne Abschnitt (3") der Konusfläche (3) des Flanschkonusrings (1) und das damit zusammenwirkende Konusteil (12) einen geringeren Konusneigungswinkel aufweisen als der dem Flansch benachbarte Abschnitt (3') der Konusfläche (3) der Flanschkonusrings (1) und das damit zusammenwirkende Konusteil (8').

6. Spannanordnung nach Anspruch 3, dadurch gekennzeichnet, daß die Bauteile (20', 20") miteinander drehverbunden sind.

**Claims**

1. Clamping arrangement for securing an outer component assembly (20, 20', 20") which has an opening (21, 34) in it, particular a hub, to an inner component having a round cylindrical external peripheral surface, in particular a shaft, with a flanged conical ring (1, 41) with a cylindrical peripheral surface (2, 42), and with a conical surface (3, 39) radially opposite it, and with a radial flange (4, 40) on one end, projecting laterally of the conical surface (3, 39), with a cone part (8 or 12 ; 30 or 12 ; 8 or 33 ; 45 or 46) with a conical cone surface (9 or 13 ; 31 ; 43 or 44) designed to co-operate with the conical surface (3, 39) of the flanged conical ring (1, 41) and with axial clamping (6, 6') and possibly withdrawal screws which extend through the flange (4, 40) and engage the cone part (8 or 12 ; 30 or 12 ; 8 or 33 ; 45 or 46), characterised in that at least one further cone part (12, 33, 46), with a conical surface (13, 44) designed to co-operate with the same conical surface (3, 3", 39) of the flanged conical ring (1, 41) is provided on the flanged conical ring (1, 41) in an axial direction next to the first cone part (8, 8', 30, 45), this further cone part being capable of being clamped to the flanged conical ring (1, 41) and/or withdrawn from it separately from the first cone part by axial clamping and, if necessary, withdrawal screws (6, 6') passing through the flange (4).

2. Clamping arrangement according to Claim 1, characterised in that the opening (21) in the outer component assembly is at least partially round and cylindrical and at least one of the cone parts is a cone ring (8, 12 ; 8') provided with a corresponding round cylindrical peripheral surface (10, 14).

3. Clamping arrangement according to Claim 1, characterised in that the outer component assembly comprises two separate components (20', 20" ; 30, 20") arranged one behind the other in an axial direction, at least one of which is arranged on a cone ring (8, 12).

4. Clamping arrangement according to one of Claims 1 to 3 characterised in that the conical surface (3) of the flanged conical ring (1) has a taper which is in the self-jamming range and clearance bores (5') at points distributed around the periphery of the flange (4) and screw-threaded bores (11") in the cone part (8') nearest to the flange (4), for clamping screws of a first diameter, and screw-threaded bores (15) in the second cone part (12) at points aligned with the screw-threaded bores (11") for clamping screws of a second, smaller, diameter and an auxiliary ring (50) is provided, having clearance bores (52) for clamping screws (6) of the second diameter at points corresponding to the clearance bores (5') in the flange (4).

5. Clamping arrangement according to Claim 4, characterised in that the portion (3") of the conical surface (3) of the flanged conical ring (1) which is furthest from the flange and the cone part (12) which co-operates with it have a smaller angle of inclination than the portion (3') of the conical surface (3) of the flanged conical ring (1) which is nearest to the flange, and the cone part (8') which co-operates with it.

6. Clamping arrangement according to Claim 3, characterised in that the components (20', 20") are secured together against relative rotation.

**Revendications**

1. Système de serrage pour la fixation d'un ensemble de pièces extérieures (20, 20', 20") présentant un logement (21, 34), en particulier un moyeu, sur lequel un élément intérieur présentant une surface cylindrique extérieure, en particulier un arbre, comprenant une bague conique à bride (1, 41), une surface périphérique cylindrique (2, 42), une surface conique disposée radialement en face (3, 39) et une bride radiale saillante (4, 40) disposée à une extrémité, sur le côté de la surface conique (3, 39) ayant une partie conique (8 ou 12 ; 30 ou 12 ; 8 ou 33 ; 45 ou 46), une certaine surface conique (9 ou 13 ; 31 ; 43 ou 44), pour agir sur la surface conique (3, 39) de la bague conique à bride (1, 41) et possèdent des vis de serrage (6, 6') et le cas échéant des vis à chasser axiales, qui agissent sur la bride (4, 40) et sur la partie conique (8 ou 12 ; 30 ou 12 ; 8 ou 33 ; 45 ou 46), caractérisé en ce que sur la bague conique à bride (1, 41) est prévue dans le sens axial, à côté de la première pièce conique (8, 8', 30, 45) au moins une autre pièce conique (12, 33, 46) avec une surface conique (13, 44) destinée à agir avec la même surface conique (3, 3", 39) de la bague conique à bride (1, 41) qui peut être serrée, ou chassée de celle-ci, séparée de la première pièce conique grâce aux vis axiales de serrage et le cas échéant des vis à chasser (6, 6'), passant au travers de la bride (4), avec une bague conique à bride (1, 41).

2. Système de serrage selon la revendication 1, caractérisé en ce que le logement (21) de la disposition extérieure de pièces, soit au moins partiellement cylindrique et qu'au moins l'une des pièces coniques, soit une bague conique (8, 12, 8') avec une surface (10, 14) périphérique cylindrique correspondante.

3. Système de serrage selon la revendication 1, caractérisé en ce que la disposition des pièces extérieures comprend deux pièces séparées (20', 20" ; 30, 20") dont au moins l'une est disposée sur une bague conique (8, 12).

4. Système de serrage selon l'une des revendications 1 à 3, caractérisé en ce que la surface conique (3) de la bague conique à bride (1) présente une pente située au voisinage de l'auto-adhérence et que soient disposés sur la périphérie en des points répartis sur la bride (4) des alésages de passage (5') et dans lesquels sont apportés dans la partie conique (8') voisine de la bride (4) des alésages filetés (11") pour des vis de serrage, d'un premier diamètre et aux endroits situés dans l'alignement des alésages filetés (11") dans la deuxième pièce conique (12) des alésages filetés (15) pour des vis de serrage, d'un deuxième diamètre, plus petit, et une bague auxiliaire (50), qui présente aux endroits correspondants aux perçages de passage (5') de la bride (4), des perçages de passage (52) pour les vis de serrage (6) du deuxième diamètre.

5. Système de serrage selon la revendication 4, caractérisé en ce que le tronçon (3") de surface conique (3) de la bague conique à bride (1), et la pièce conique (12) agissant ensemble, présentent un angle de pente de cône plus limité que celui du tronçon (3') de surface conique (3), voisin de la bride de la bague conique (1), et la pièce conique (8') sollicitée ensemble.

6. Système de serrage selon la revendication 3, caractérisé en ce que les pièces (20', 20") sont liées en rotation entre elles.

FIG.5

FIG.6

FIG.7